# EUROPÄISCHE PATENTSCHRIFT

(11) **EP 3 443 427 B1**
(45) Veröffentlichungstag und Bekanntmachung des Hinweises auf die Patenterteilung: **03.06.2020**
(21) Anmeldenummer: 17708704.6
(22) Anmeldetag: 20.02.2017
(51) Int. Cl.: G05D 1/02, G08G 1/14, B62D 15/02, G06Q 10/02, G06Q 50/30

(54) **AUTOMATISIERTER PARKSERVICE MIT VERMIETBAREN STELLPLÄTZEN**
AUTOMATED PARKING SERVICE HAVING PARKING SPACES THAT CAN BE RENTED OUT
SERVICE DE STATIONNEMENT AUTOMATISÉ AVEC PLACES DE STATIONNEMENT LOUABLES

(30) Priorität: 12.04.2016 DE 102016206040
(43) Veröffentlichungstag der Anmeldung: 20.02.2019
(73) Patentinhaber: Robert Bosch GmbH, 70442 Stuttgart (DE)
(72) Erfinder: NORDBRUCH, Stefan, 70806 Kornwestheim (DE); ROUS, Martin, 74395 Mundelsheim (DE)
(86) Internationale Anmeldenummer: PCT/EP2017/053750
(87) Internationale Veröffentlichungsnummer: WO 2017/178139

(56) Entgegenhaltungen:
- DE-A1-102014 001 554
- JP-A- 2015 153 145

## Beschreibung

Die Erfindung betrifft einen automatisierten Parkservice. Insbesondere betrifft die Erfindung die dynamische Verwaltung eines Platzes, der für den Parkservice zur Verfügung steht.

### Stand der Technik

Ein automatisierter Parkservice (Automated Valet Parking, AVP) umfasst eine Parkfläche, auf der mehrere Stellplätze vorgesehen sind, und einen Übergabeplatz. Ein Kraftfahrzeug kann manuell zum Übergabeplatz gefahren und dort an den Parkservice übergeben werden. Das Kraftfahrzeug wird dann automatisiert auf einen freien Stellplatz der Parkfläche gefahren und dort abgestellt. Zum Abholen wird das Kraftfahrzeug automatisiert von der Stellfläche zurück zur Übergabestelle gefahren und kann dort vom Fahrer übernommen werden.

Die Stellplätze des automatisierten Parkservices können einen großen Teil der Stellplätze eines Parkhauses oder eines Parkplatzes ausmachen. Das Betreiben des automatisierten Parkservices kann unwirtschaftlich sein, wenn nicht ausreichend Kraftfahrzeuge auf den Stellplätzen abgestellt werden. Umgekehrt kann der automatisierte Parkservice unattraktiv sein, wenn er zu wenige Stellplätze aufweist und daher häufig keine zusätzlichen Kraftfahrzeuge mehr aufnehmen kann.

Aus DE 102014001554 A1 ist ein Verfahren zum automatischen Parken eines Fahrzeugs auf einer eine Vielzahl von Parkplätzen aufweisenden Parkfläche bekannt. Dabei erfolgt zunächst ein Zuweisen eines bestimmten Parkplatzes für das Kraftfahrzeug durch eine zentrale Steuerungseinrichtung. Anschließend erfolgt ein automatisches oder von der Steuerungseinrichtung gesteuertes Fahren des Fahrzeugs zu dem bestimmten Parkplatz. Es ist vorgesehen, dass wenigstens eine Umweltinformation für die Steuerungseinrichtung zur Verfügung gestellt wird, die Parkplätze anhand der wenigstens einen Umweltinformation bewertet werden und gegebenenfalls ein Umparken eines sich auf einem als suboptimal bewerteten Parkplatz befindenden Fahrzeugs auf einen als optimal bewerteten Parkplatz durch die Steuerungseinrichtung durchgeführt wird. Das Dokument DE 102014001554 A1 ist als nächstliegender Stand der Technik nach dem Oberbegriff der Ansprüche 1 und 7 zu sehen.

JP 2015-153145 A offenbart eine AVP-Lösung, die es einem Benutzer eines Fahrzeugs ermöglicht, sein Fahrzeug auf seiner gewünschten Parkposition zu parken, auch wenn die gewünschte Parkposition zum Zeitpunkt der Verladung des Fahrzeugs auf einen Parkplatz nicht frei ist. Dazu ist ein Parkunterstützungssystem konfiguriert, um die Informationen einer Parkposition des Fahrzeugs zu erfassen, das von einem Benutzer auf einem Parkplatz gewünscht wird, und um, wenn das Fahrzeug auf einer anderen Parkposition als der gewünschten Parkposition geparkt wird, zu überwachen, ob die gewünschte Parkposition frei wird. Wenn infolge der Überwachung bestimmt wird, dass die gewünschte Parkposition frei geworden ist, wird das Fahrzeug automatisch zu der gewünschten Parkposition geführt und dort geparkt. Somit ist es dem Benutzer möglich, das Fahrzeug auf seiner gewünschten Parkposition zu parken, auch wenn die gewünschte Parkposition zum Zeitpunkt der Fahrzeugbeladung nicht frei ist.

Der Erfindung liegt die Aufgabe zugrunde, einen verbesserten automatisierten Parkservice anzugeben. Die Erfindung löst diese Aufgabe mittels der Gegenstände der unabhängigen Ansprüche. Unteransprüche geben bevorzuge Ausführungsformen wieder.

Eine Parkfläche umfasst einen ersten und einen zweiten Bereich, die jeweils zum Parken eines Kraftfahrzeugs eingerichtet sind. Dabei ist eine Nutzungsberechtigung für den zweiten Bereich zeitlich begrenzt. Ein Verfahren zum Parken eines Kraftfahrzeugs auf der Parkfläche umfasst Schritte des Bestimmens, dass im ersten Bereich Platz ist, um darauf das im zweiten Bereich geparkte Kraftfahrzeug abzustellen; und des automatisierten Umparkens des Kraftfahrzeugs vom zweiten Bereich in den ersten Bereich.

Die Parkfläche kann beispielsweise einen Parkplatz oder ein Parkhaus umfassen. Während der erste Bereich zur ausschließlichen Nutzung für einen automatisierten Parkservice vorgesehen ist, ist ein zweiter Bereich fest vermietet, beispielsweise an einen Anwohner oder einen Betrieb im Bereich der Parkfläche. Eine Stellfläche auf dem zweiten Bereich kann unmittelbar einer Person oder einem Kraftfahrzeug zugeordnet sein. Derartige, auf Dauer vermietete Parkplätze werden jedoch nicht zu allen Zeiten von ihren Besitzern verwendet. Diese Stellplätze können daher untervermietet werden, wofür es Verwaltungssysteme gibt, die das Zusammenführen eines Anbieters und eine Suchers eines Stellplatzes vereinfachen. Der Erfindung liegt der Gedanke zugrunde, dass die für den automatisierten Parkservice zur Verfügung stehende Fläche dynamisch um einen oder mehrere zweite Bereiche vergrößert werden kann, die zu diesem Zweck vorübergehend gemietet werden können. Die zur Verfügung stehende Fläche für das automatisierte Parksystem kann so dynamisch angepasst werden, um verbessert an Zeiten besonders starker und besonders schwacher Nutzung angepasst zu werden. Durch das Umparken eines Kraftfahrzeugs vom zweiten in den ersten Bereich kann die Nutzungsberechtigung für den zweiten Bereich zurückgegeben werden, sodass keine zusätzlichen Kosten mehr entstehen. Sollten für das Benutzen des ersten Bereichs Kosten entstehen, so sind diese, nachdem der erste Bereich ohne Zeitbeschränkung bereitsteht, üblicherweise konstant. Ein für andere Kraftfahrzeuge zur Verfügung stehender Platz der Parkfläche kann vergrößert sein und die Wirtschaftlichkeit des automatisierten Parkservices kann verbessert sein.

Bevorzugterweise wird das Umparken derart durchgeführt, dass der zweite Bereich möglichst leer ist. Dadurch können Kosten für die Nutzungsberechtigung des zweiten Bereichs minimiert sein und der zur Verfügung stehende Platz für Kraftfahrzeuge, die den automatisierten Parkservice nicht in Anspruch nehmen, kann maximiert sein.

Es ist erfindungsgemäß vorgesehen, dass eine Nutzungsberechtigung für einen zweiten Bereich vorausschauend angefordert oder zurückgegeben wird. Dazu ist vorgesehen, dass ein voraussichtlicher Bedarf für die Größe des zweiten Bereichs prädiziert wird und eine Vergrößerung oder Verkleinerung des zweiten Bereichs in Abhängigkeit des prädizierten Bedarfs angefordert wird. Die Prädiktion erfolgt auf der Basis historischer Daten, die einen Platzbedarf in Abhängigkeit eines Zeitraums angeben. Der Platzbedarf ist üblicherweise zyklisch über die Zeit mit einer Zykluszeit von beispielsweise einem Tag oder einer Woche, sodass die Prädiktion leicht durchgeführt werden kann. Ist absehbar, dass der Platzbedarf zum Abstellen von Kraftfahrzeugen ansteigen wird, so können Nutzungsberechtigungen für einen oder mehrere zweite Bereiche angefordert werden, noch bevor der zur Verfügung stehende Platz aufgebraucht ist. Das Anfordern kann auch in Abhängigkeit einer Anzahl zur Verfügung stehender zweiter Bereiche erfolgen. Nutzungsberechtigungen für die zweiten Bereiche können so angefordert werden, solange noch zweite Bereiche frei sind. Bevorzugterweise werden Nutzungsberechtigungen für einen oder mehrere zweite Bereiche aufrechterhalten, auf denen sich kein Kraftfahrzeug befindet, wenn der erste Bereich bereits gefüllt ist. Ist zu erwarten, dass der Bedarf für die Größe des zweiten Bereichs absinken wird, so können Nutzungsberechtigungen für einen oder mehrere zweite Bereiche frühzeitig freigegeben werden.

Bevorzugterweise wird die Nutzungsberechtigung für einen möglichst nahe am ersten Bereich liegenden zweiten Bereich angefordert. Idealerweise hängen der erste Bereich und der zweite Bereich zusammen, sodass das automatisierte Parken von Kraftfahrzeugen zwischen dem ersten und dem zweiten Bereich einfacher und wirtschaftlicher wird. Lange Überführungswege zwischen einem zweiten und dem ersten Bereich können dadurch eingespart werden.

In noch einer weiteren Ausführungsform grenzen zwei zweite Bereiche aneinander an, wobei ein Kraftfahrzeug überlappend auf den beiden zweiten Bereichen geparkt wird. Der zweite Bereich umfasst üblicherweise eine vorbestimmte Anzahl von Stellplätzen. Vorliegend wird davon ausgegangen, dass ein Stellplatz einem zweiten Bereich entspricht. Auf zwei nebeneinander liegenden zweiten Bereichen können entweder zwei übliche Kraftfahrzeuge oder unter Umständen drei etwas kleinere Kraftfahrzeuge abgestellt werden. Anders ausgedrückt kann die Unterteilung einer Fläche in Stellplätze beim Abstellen von Kraftfahrzeugen ignoriert werden. Dadurch kann einerseits eine Größe eines abzustellenden Kraftfahrzeugs verbessert berücksichtigt werden. Andererseits kann durch das enge Parken von Kraftfahrzeugen "Tür an Tür" Platz gespart werden. Der zweite Bereich kann dadurch verbessert ausgenutzt werden. Eine entsprechende Technik kann natürlich auch auf dem ersten Bereich angewendet werden.

Ein Computerprogrammprodukt umfasst Programmcodemittel zur Durchführung des oben beschriebenen Verfahrens, wenn das Computerprogrammprodukt auf einer Verarbeitungseinrichtung oder einer Steuereinrichtung abläuft oder auf einem computerlesbaren Datenträger gespeichert ist.

Ein System zum Parken eines Kraftfahrzeugs umfasst eine Parkfläche mit einem ersten und einem zweiten Bereich, jeweils zum Parken eines Kraftfahrzeugs, wobei eine Nutzungsberechtigung für den zweiten Bereich zeitlich begrenzt ist; und eine Steuereinrichtung zum automatisierten Umparken eines Kraftfahrzeugs, wobei die Steuereinrichtung dazu eingerichtet ist, zu bestimmen, dass im ersten Bereich Platz ist, um darauf ein Kraftfahrzeug, das im zweiten Bereich geparkt ist, abzustellen, und dazu, das Umparken des Kraftfahrzeugs vom zweiten in den ersten Bereich zu steuern.

Bevorzugterweise umfasst das System eine Schnittstelle zu einem Verwaltungssystem für zweite Bereiche auf der Parkfläche. Über die Schnittstelle kann eine Anforderung oder eine Rückgabe einer Nutzungsberechtigung für einen zweiten Bereich ausgetauscht werden.

Wie oben beschrieben wurde, ist es bevorzugt, dass der erste Bereich und der oder die zweiten Bereiche möglichst eng zusammenhängen. Um zu vermeiden, dass ein Parkplatzsucher, der weder die Dienste des automatisierten Parkservices in Anspruch nimmt, noch einem zweiten Bereich fest zugeordnet ist, einen zweiten Bereich belegt, der vorteilhaft nahe am ersten Bereich liegt und deshalb später durch das System verwaltet werden könnte, kann ein Verkehrsleitsystem im Bereich der Parkfläche verwendet werden, um den Parkplatzsucher möglichst lange vom ersten Bereich fernzuhalten. In diesem Fall kann die Steuereinrichtung dazu eingerichtet sein, ein manuell gefahrenes Kraftfahrzeug mittels des dynamischen Verkehrsleitsystems für Kraftfahrzeuge auf der Parkfläche entlang eines Pfads über die Parkfläche führen, der sich sukzessive an den ersten Bereich annähert. Anders ausgedrückt wird der Pfad bevorzugterweise so gewählt, dass er zuerst an möglichst vielen entfernt vom ersten Bereich gelegenen zweiten Bereichen vorbeiführt. Das manuell gefahrene Kraftfahrzeug wird dadurch vermehrt auf einem zweiten Bereich abgestellt werden, der weit vom ersten Bereich entfernt und somit für die Verwaltung durch das Verkehrsleitsystem attraktiver ist. Der nahe gelegene zweite Bereich kann dadurch mit erhöhter Wahrscheinlichkeit länger frei gehalten werden, sodass er später durch das Verkehrsleitsystem nutzbar ist. Insbesondere dann, wenn bekannt ist, welches der Kraftfahrzeuge, die im Bereich der Parkfläche unterwegs sind, manuell gefahren wird und welches davon wahrscheinlich auf Parkplatzsuche ist, kann das dynamische Verkehrsleitsystem selektiv die parkplatzsuchenden Kraftfahrzeuge möglichst lange aus einer Umgebung des ersten Bereichs fernhalten.

### Kurze Beschreibung der Figuren

Die Erfindung wird nun mit Bezug auf die beigefügten Figuren genauer beschrieben, in denen:
- Fig. 1: ein System zum Parken von Kraftfahrzeugen;
- Fig. 2: ein Ablaufdiagramm eines Verfahrens zum Steuern des Systems von Fig. 1; und
- Fig. 3: ein Ablaufdiagramm eines weiteren Verfahrens zum Steuern des Systems von Fig. 1
darstellt.

### Genaue Beschreibung von Ausführungsbeispielen

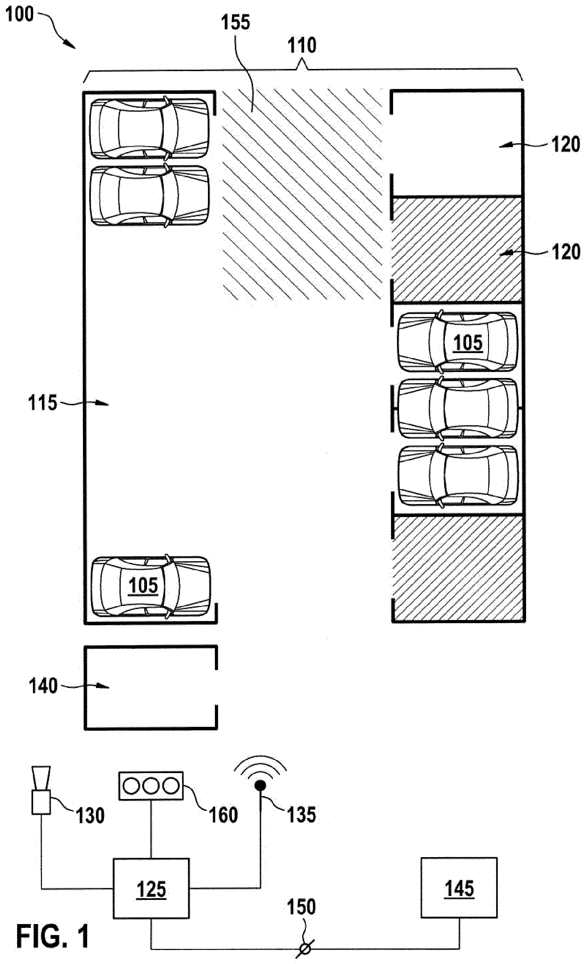

Figur 1 zeigt ein System 100 zum Parken von Kraftfahrzeugen 105. Das System 100 umfasst eine Parkfläche 110, auf der ein erster Bereich 115 und ein zweiter Bereich 120 vorgesehen sind, die jeweils zum Abstellen wenigstens eines Kraftfahrzeugs 105 eingerichtet sind. Ferner umfasst das System 100 eine Steuereinrichtung 125 zur Steuerung eines Umparkens eines Kraftfahrzeugs 105. Dazu ist die Steuereinrichtung 125 bevorzugterweise mit einem Sensor 130 zur Abtastung eines Kraftfahrzeugs 105 im Bereich der Parkfläche 110 oder einer drahtlosen Schnittstelle 135 zur Herstellung einer Datenverbindung zum Kraftfahrzeug 105 ausgestattet.

Bevorzugterweise ist eine optionale übergabestelle 140 vorgesehen. Ein Fahrer kann sein Kraftfahrzeug 105 auf der Übergabestelle 140 abstellen und die Steuerung an das System 100 übergeben. Dieses führt einen automatisierten Parkservice (AVP) durch, in dem das Kraftfahrzeug 105 automatisiert, also ohne Überwachung oder Eingreifen des Fahrers oder einer anderen Person, von der Übergabestelle 140 auf einen freien Platz des ersten Bereichs 115 gefahren wird. Es sind unterschiedliche Ausführungsformen bekannt, die sich vornehmlich darin unterscheiden, welcher Teil der Steueraufgabe seitens der Steuereinrichtung 125 und welcher seitens des Kraftfahrzeugs 105 durchgeführt wird. Der Vorgang kann in umgekehrter Reihenfolge durchgeführt werden, um das Kraftfahrzeug 105 an der Übergabestelle 140 seinem Fahrer wieder bereitzustellen.

Es wird vorgeschlagen, den ersten Bereich 115 durch einen oder mehrere zweite Bereiche 120 dynamisch zu ergänzen. Das Kraftfahrzeug 105 kann dann nicht auch zwischen der Übergabestelle 140 und einer Fläche auf einem zweiten Bereich 120 automatisch gefahren werden. Die zweiten Bereiche 120 umfassen bevorzugterweise jeweils einen Stellplatz, der zur Aufnahme genau eines Kraftfahrzeugs 105 vorgesehen ist, wobei die zweiten Bereiche 120 gemietet werden können, wenn sich auf ihnen kein Kraftfahrzeug 105 befindet. Bevorzugterweise ist ein zweiter Bereich 120 fest einem Dauermieter zugeordnet, der den zweiten Bereich 120 untervermieten kann. Dazu kann er angeben, zu welchen Zeiten er den zweiten Bereich 120 verfügbar machen möchte und zu welchen Zeiten er ihn selbst zu nutzen plant. Während der angegebenen freien Zeiten kann der zweite Bereich 120 von seinem Besitzer gemietet werden, wozu ein Reservierungssystem 145 bereitgestellt sein kann. Es wird vorgeschlagen, dynamisch, also je nach Platzbedarf für abzustellende Kraftfahrzeuge 105, eine Nutzungsberechtigung für einen oder mehrere zweite Bereiche 120 anzufordern oder zurückzugeben, sodass der automatisierte Parkservice dynamisch auch einen oder mehrere zweite Bereiche 120 zum Abstellen von Kraftfahrzeugen 105 verwenden kann. Um die Nutzungsberechtigung für einen zweiten Bereich 120 anzufordern oder zurückzugeben, sind die Steuereinrichtung 125 und das Reservierungssystem 145 bevorzugterweise mittels einer Schnittstelle 150 miteinander verbunden.

Es wird weiterhin vorgeschlagen, dass die Steuereinrichtung 125 dazu eingerichtet ist, zu jeder Zeit möglichst wenige Nutzungsberechtigungen für zweite Bereiche 120 aktiv zu halten. Dazu ist weiterhin bevorzugt, dass eine Nutzungsberechtigung eines ungenutzten zweiten Bereichs 120 möglichst umgehend zurückgegeben wird. Ein zweiter Bereich 120 kann freigemacht werden, indem ein Kraftfahrzeug 105 von ihm auf den ersten Bereich 115 umgeparkt wird, falls dort Platz frei ist. Die Steuereinrichtung 125 ist daher bevorzugterweise dazu eingerichtet, ein Kraftfahrzeug 105 vom zweiten Bereich 120 in den ersten Bereich 115 umzuparken, wann immer dies möglich ist. Es wird angestrebt, den ersten Bereich 115 mit möglichst vielen Kraftfahrzeugen 105 auszunutzen und gleichzeitig möglichst wenige zweite Bereiche 120 über Nutzungsberechtigungen anzumieten.

Ferner kann die Steuereinrichtung 125 dazu eingerichtet sein, ein Kraftfahrzeug 105 zwischen zwei zweiten Bereichen 120 umzuparken, beispielsweise wenn eine zeitlich beschränkte Nutzungsberechtigung abläuft.

Außerdem können einer oder mehrere dynamische Bereiche 155 vorgesehen sein, in denen ein Kraftfahrzeug 105 kurzfristig abgestellt werden kann. Dies kann erforderlich sein, um beispielsweise bestimmte Rangier- oder Vertauschungsmanöver von Kraftfahrzeugen 105 zu ermöglichen. Außerdem kann der dynamische Bereich 155 dazu verwendet werden, eine kurzfristig auftretende Spitzenbelastung an Kraftfahrzeugen 105 zu bewältigen. Ein dynamischer Bereich 155 kann dadurch ausgezeichnet sein, dass ein Kraftfahrzeug 105, das auf ihm abgestellt wird, die Beweglichkeit eines anderen Kraftfahrzeugs 105 einschränken kann. Das erstgenannte Kraftfahrzeug 105 kann umgeparkt werden müssen, um das letztgenannte Kraftfahrzeug 105 auf der Parkfläche 110 weiterbewegen zu können.

Beim Anfordern und Freigeben von zweiten Bereichen 120 ist bevorzugt, dass der Teil der Parkfläche 110, der dem System 100 für den automatisierten Parkservice zur Verfügung steht, möglichst zusammenhängend ist. Es werden daher bevorzugt zunächst solche zweite Bereiche 120 angemietet, die sich möglichst nahe am ersten Bereich 115 befinden. In entsprechender Weise werden bevorzugt zunächst solche zweite Bereiche 120 freigegeben, die sich am weitesten vom ersten Bereich 115 entfernt befinden.

Das Anfordern und Freigeben von zweiten Bereichen 120 kann auf der Basis von historischen Daten bezüglich des benötigten Platzes zum Abstellen von Kraftfahrzeugen 105 erfolgen. Zweite Bereiche 120 können so vorausschauend angefordert (angemietet) oder freigegeben (gekündigt) werden.

Auf der Parkfläche 110 können noch weitere Stellflächen existieren, die nicht durch das System 100 verwaltet werden. Beispielsweise kann die Parkfläche 110 ein öffentliches Parkhaus umfassen, auf denen der erste Bereich 115 an einen Betreiber des Systems 100 und die zweiten Bereiche 120 an andere Personen fest vermietet sind. Verbleibende Stellflächen können in gewohnter Weise frei vermietet werden.

Um zu begünstigen, dass nahe am ersten Bereich 115 möglichst viele freie zweite Bereiche 120 liegen, für die später eine Nutzungsberechtigung angefordert werden kann, kann die Steuereinrichtung 125 mit einem dynamischen Verkehrsleitsystem 160 verbunden sein, das beispielsweise veränderliche Schilder, Lichtsignale, Schranken oder andere Elemente zur Steuerung eines Verkehrsflusses auf der Parkfläche 110 umfasst. Mittels des Verkehrsleitsystems 160 kann ein Verkehr von Parkplatzsuchenden, die ihr Kraftfahrzeug 105 manuell fahren, gezielt aus der Nähe des ersten Bereichs 115 ferngehalten werden.

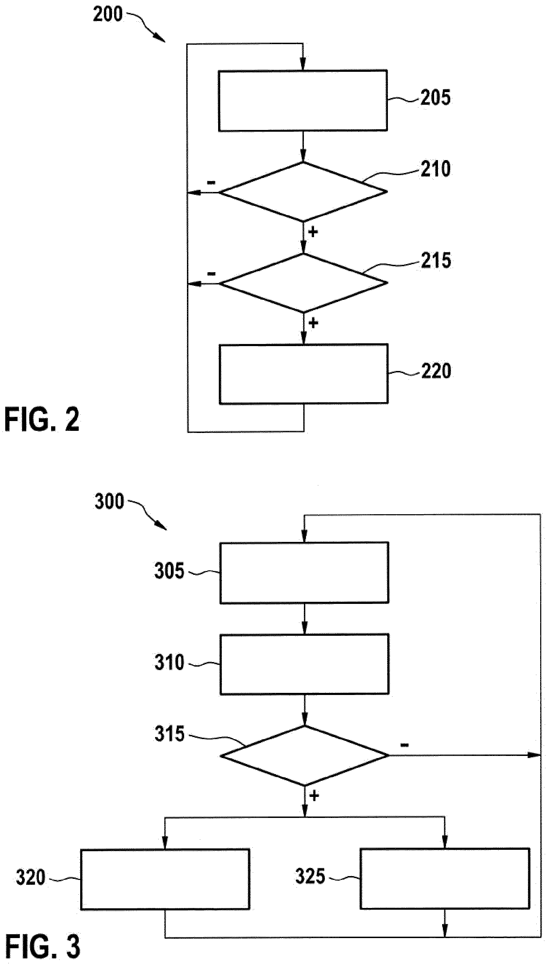

Figur 2 zeigt ein Ablaufdiagramm eines Verfahrens 200 zum Steuern des Systems 100 von Figur 1. Das Verfahren 200 beginnt in einem Schritt 205. In einem Schritt 210 wird bestimmt, ob sich ein Kraftfahrzeug 105 auf einem zweiten Bereich 120 befindet, für das eine Nutzungsberechtigung durch das System 100 besteht. Ist dies nicht der Fall, so kann das Verfahren 200 zum Schritt 205 zurückkehren und erneut durchlaufen. Andernfalls wird bevorzugterweise in einem Schritt 215 überprüft, ob auf dem ersten Bereich 115 Platz zum Abstellen des Kraftfahrzeugs 105, das auf dem zweiten Bereich 120 lokalisiert wurde, besteht. Ist dies nicht der Fall, so kann das Verfahren 200 wieder zum Anfang 205 zurückkehren. Andernfalls wird in einem Schritt 220 das Kraftfahrzeug 105 vom zweiten Bereich 120 in den ersten Bereich 115 umgeparkt. Bevorzugterweise wird anschließend die Nutzungsberechtigung für den freigewordenen zweiten Bereich 120 zurückgegeben. Nach dem Schritt 220 kann das Verfahren 200 erneut durchlaufen.

Die Schritte 210 und 215 können jeweils ein Abtasten der Parkfläche 110, beispielsweise mittels des Sensors 130, umfassen. Das Kraftfahrzeug 105 und der freie Platz können jedoch auch auf der Basis von Verwaltungsdaten bestimmt werden, die durch die Steuereinrichtung 125 beim Abstellen der Kraftfahrzeuge 105 angelegt wurden.

Figur 3 zeigt ein Ablaufdiagramm eines Verfahrens 300 zum Steuern des Systems 100 von Figur 1. Das Verfahren 300 kann insbesondere mit dem Verfahren 200 integriert werden.

In einem ersten Schritt 305 wird ein benutzter Platz bestimmt, der dem System 100 zum Abstellen von Kraftfahrzeugen 105 zur Verfügung steht. Dabei können Bodenflächen des ersten Bereichs 115 und des zweiten Bereichs 120 berücksichtigt werden. In einem Schritt 310 wird ein benötigter Platz geschätzt. Diese Schätzung umfasst bevorzugterweise eine Vorhersage (Prädiktion) und bezieht sich auf einen zukünftigen Zeitraum, der beispielsweise einige Minuten bis einige Stunden umfassen kann. Das Prädizieren erfolgt bevorzugterweise auf der Basis historischer Daten.

In einem Schritt 315 wird dann bestimmt, ob eine Änderung der Nutzungsrechte für einen oder mehrere zweite Bereiche 120 erforderlich ist. Ist dies nicht der Fall, so kann das Verfahren 300 zum Anfang zurückkehren und erneut durchlaufen.

Ist eine Änderung erforderlich, so kann diese in einem ersten Fall eine Erweiterung des zur Verfügung stehenden Platzes und in einem zweiten Fall seine Verringerung betreffen. Der erste Fall wird in einem Schritt 320 und der zweite in einem Schritt 325 behandelt. Im Schritt 320 werden eine oder mehrere Anforderungen für Nutzungsberechtigungen eines oder mehrerer zweiter Bereiche 120 ausgegeben, und zwar bevorzugterweise mittels der Schnittstelle 150 an das Reservierungssystem 145. Es ist günstig, wenn zweite Bereiche 120, die durch das System 100 verwaltet werden, möglichst nahe am ersten Bereich liegen. Die Anforderung km Schritt 320 kann daher eine bevorzugte Lage des angeforderten zweiten Bereichs 120 umfassen. Eine Zuteilung eines zweiten Bereichs 120 an das System 100 kann diese Präferenz berücksichtigen oder auch ohne konkreten Ortswunsch versuchen, einen möglichst nahe am ersten Bereich 115 liegenden zweiten Bereich 120 bereitzustellen. Gegebenenfalls kann auch eine Reservierung angefordert werden, also die Erteilung einer Nutzungsberechtigung für einen späteren Zeitpunkt. Im Schritt 325 wird die Nutzungsberechtigung für einen zweiten Bereich 120 zurückgegeben. Bevorzugterweise werden zuerst solche Nutzungsberechtigungen zurückgegeben, die sich auf zweite Bereiche 120 beziehen, die am weitesten vom ersten Bereich 115 entfernt sind. Der zweite Bereich 120 kann anschließend durch Kraftfahrzeuge 105 benutzt werden, die nicht durch das System 100 verwaltet werden.

Es ist bevorzugt, dass die Verfahren 200 und 300 verschränkt ablaufen, insbesondere in Form einer gemeinsamen Schleife. In einer anderen Ausführungsform können Zwischenergebnisse zwischen den nebenläufig ablaufenden Verfahren 200 und 300 ausgetauscht werden. Die Zwischenergebnisse können insbesondere einen verfügbaren Platz zum Abstellen von Kraftfahrzeugen 105 umfassen.

## Patentansprüche

1. Verfahren (200, 300) zum Parken eines Kraftfahrzeugs (105) auf einer Parkfläche (110), die einen ersten (115) und einen zweiten Bereich (120) umfasst, die jeweils zum Parken eines Kraftfahrzeugs (105) eingerichtet sind, wobei eine Nutzungsberechtigung für den zweiten Bereich (120) zeitlich begrenzt ist, und wobei das Verfahren (200, 300) folgende Schritte umfasst:
- Bestimmen (210, 215), dass im ersten Bereich (115) Platz ist, um darauf das im zweiten Bereich (120) geparkte Kraftfahrzeug (105) abzustellen; und
- automatisiertes Umparken (220) des Kraftfahrzeugs (105) vom zweiten Bereich (120) in den ersten Bereich (115) **dadurch gekennzeichnet, dass** eine Nutzungsberechtigung für einen zweiten Bereich (120) vorausschauend angefordert (320) oder zurückgegeben (325) wird und wobei ein voraussichtlicher Bedarf für die Größe des zweiten Bereichs (120) auf der Basis historischer Daten prädiziert (310) wird und eine Vergrößerung des zweiten Bereichs (120) in Abhängigkeit des prädizierten Bedarfs angefordert (320) wird.

2. Verfahren (200, 300) nach Anspruch 1, wobei das Umparken (220) derart durchgeführt wird, dass der zweite Bereich (120) möglichst leer ist.

3. Verfahren (200, 300) nach Anspruch 1 oder 2, wobei die Nutzungsberechtigung für einen möglichst nahe am ersten Bereich (115) liegenden zweiten Bereich (120) angefordert (320) wird.

4. Verfahren (200, 300) nach einem der Ansprüche 1 bis 3, wobei zwei zweite Bereiche (120) aneinander angrenzen und ein Kraftfahrzeug (105) überlappend auf beiden zweiten Bereichen (120) geparkt wird.

5. Verfahren (200, 300) nach einem der Ansprüche 1 bis 3, wobei die Nutzungsberechtigung für einen zweiten Bereich (120) auf der Basis des voraussichtlichen Bedarfs und eines aktuell unbelegten Anteils des zweiten Bereichs (120) zurückgegeben (325) wird.

6. Computerprogrammprodukt mit Programmcodemitteln zur Durchführung des Verfahrens (200, 300) nach einem der vorangehenden Ansprüche, wenn das Computerprogrammprodukt auf einer Verarbeitungseinrichtung (125) abläuft oder auf einem computerlesbaren Datenträger gespeichert ist.

7. System (100) zum Parken eines Kraftfahrzeugs (105), wobei das System (100) folgendes umfasst:
- eine Parkfläche (110) mit einem ersten (115) und einem zweiten Bereich (120), jeweils zum Parken eines Kraftfahrzeugs (105),
- wobei eine Nutzungsberechtigung für den zweiten Bereich (120) zeitlich begrenzt ist; und
- eine Steuereinrichtung (125) zum automatisierten Umparken (220) eines Kraftfahrzeugs (105),
- wobei die Steuereinrichtung (125) dazu eingerichtet ist, zu bestimmen, dass im ersten Bereich (115) Platz ist, um darauf ein Kraftfahrzeug (105), das im zweiten Bereich (120) geparkt ist, abzustellen, und dazu, das Umparken (220) des Kraftfahrzeugs (105) vom zweiten (120) in den ersten Bereich (115) zu steuern, **dadurch gekennzeichnet, dass** eine Nutzungsberechtigung für einen zweiten Bereich (120) vorausschauend angefordert (320) oder zurückgegeben (325) wird und wobei ein voraussichtlicher Bedarf für die Größe des zweiten Bereichs (120) auf der Basis historischer Daten prädiziert (310) wird und eine Vergrößerung des zweiten Bereichs (120) in Abhängigkeit des prädizierten Bedarfs angefordert (320) wird.

8. System (100) dem vorangehenden Anspruch, ferner umfassend ein dynamisches Verkehrsleitsystem (160) für Kraftfahrzeuge (105) auf der Parkfläche (110), wobei die Steuereinrichtung (125) dazu eingerichtet ist, ein manuell gefahrenes Kraftfahrzeug (105) entlang eines Pfads über die Parkfläche (110) zu führen, der sich sukzessive an den ersten Bereich (115) annähert.

## Claims

1. Method (200, 300) for parking a motor vehicle (105) in a parking area (110), which comprises a first region (115) and a second region (120), which are each designed for the parking of a motor vehicle (105), wherein a usage authorization for the second region (120) is time-limited, and wherein the method (200, 300) comprises the following steps:
- determining (210, 215) that there is space in the first region (115) for parking in that region the motor vehicle (105) parked in the second region (120); and
- re-parking (220) the motor vehicle (105) from the second region (120) into the first region (115) in an automated manner,
**characterized in that**
a usage authorization for a second region (120) is pre-emptively requested (320) or returned (325) and wherein a probable requirement for the size of the second region (120) is predicted (310) on the basis of historical data and, depending on the predicted requirement, an increase in the size of the second region (120) is requested (320).

2. Method (200, 300) according to Claim 1, wherein the re-parking (220) is carried out in such a way that whenever possible the second region (120) is vacant.

3. Method (200, 300) according to Claim 1 or 2, wherein the usage authorization for a second region (120) lying as close as possible to the first region (115) is requested (320).

4. Method (200, 300) according to one of Claims 1 to 3, wherein two second regions (120) are adjacent to one another and a motor vehicle (105) is parked in an overlapping manner in both second regions (120).

5. Method (200, 300) according to one of Claims 1 to 3, wherein the usage authorization for a second region (120) is returned (325) on the basis of the probable requirement and a currently unoccupied portion of the second region (120).

6. Computer program product with program coding means for carrying out the method (200, 300) according to one of the preceding claims when the computer program product is run on a processing device (125) or is stored on a computer-readable data carrier.

7. System (100) for parking a motor vehicle (105), wherein the system (100) comprises the following:
- a parking area (110) with a first region (115) and a second region (120), each for parking a motor vehicle (105),
- wherein a usage authorization for the second region (120) is time-limited; and
- a control device (125) for automated re-parking (220) of a motor vehicle (105),
- wherein the control device (125) is designed to determine that there is space in the first region (115) for parking in that region a motor vehicle (105) that is parked in the second region (120), and to control the re-parking (220) of the motor vehicle (105) from the second region (120) into the first region (115),
**characterized in that**
a usage authorization for a second region (120) is pre-emptively requested (320) or returned (325) and wherein a probable requirement for the size of the second region (120) is predicted (310) on the basis of historical data and, depending on the predicted requirement, an increase in the size of the second region (120) is requested (320).

8. System (100) according to the preceding claim, also comprising a dynamic traffic control system (160) for motor vehicles (105) in the parking area (110), wherein the control device (125) is designed to guide a manually driven motor vehicle (105) along a path over the parking area (110) that comes progressively closer to the first region (115).

## Revendications

1. Procédé (200, 300) de stationnement d'un véhicule automobile (105) sur une aire de stationnement (110), qui comprend une première (115) et une deuxième zone (120) qui sont respectivement conçues pour le stationnement d'un véhicule automobile (105), une autorisation d'utilisation pour la deuxième zone (120) étant limitée dans le temps et le procédé (200, 300) comprenant les étapes suivantes :
- détermination (210, 215) qu'il existe dans la première zone (115) de la place pour pouvoir y arrêter le véhicule automobile (105) stationné dans la deuxième zone (120) ; et
- transfert de stationnement (220) automatique du véhicule automobile (105) de la deuxième zone (120) dans la première zone (115)
**caractérisé en ce que**
une autorisation d'utilisation pour une deuxième zone (120) est demandée (320) ou retournée (325) prévisionnellement et un besoin prévisionnel pour la taille de la deuxième zone (120) étant prédit (310) sur la base de données historiques et un agrandissement de la deuxième zone (120) étant demandé (320) en fonction du besoin prévisionnel.

2. Procédé (200, 300) selon la revendication 1, le transfert de stationnement (220) étant effectué de telle sorte que la deuxième zone (120) est si possible vide.

3. Procédé (200, 300) selon la revendication 1 ou 2, l'autorisation d'utilisation étant demandée (320) pour une deuxième zone (120) qui se trouve si possible proche de la première zone (115).

4. Procédé (200, 300) selon l'une des revendications 1 à 3, deux deuxièmes zones (120) étant adjacentes l'une de l'autre et un véhicule automobile (105) étant stationné en chevauchement sur les deux deuxièmes zones (120) .

5. Procédé (200, 300) selon l'une des revendications 1 à 3, l'autorisation d'utilisation pour une deuxième zone (120) étant retournée (325) sur la base du besoin prévisionnel et d'une part actuellement non occupée de la deuxième zone (120).

6. Produit de programme informatique comprenant des moyens de code de programme destinés à mettre en œuvre le procédé (200, 300) selon l'une des revendications précédentes lorsque le produit de programme informatique est exécuté sur un dispositif de traitement (125) ou est enregistré sur un support de données lisible par ordinateur.

7. Système (100) de stationnement d'un véhicule automobile (105), le système (100) comprenant les éléments suivants :
- une aire de stationnement (110) ayant une première (115) et une deuxième zone (120), respectivement pour le stationnement d'un véhicule automobile (105)
- une autorisation d'utilisation pour la deuxième zone (120) étant limitée dans le temps ; et
- un dispositif de commande (125) destiné au transfert de stationnement (220) automatique d'un véhicule automobile (105),
- le dispositif de commande (125) étant conçu pour déterminer qu'il existe dans la première zone (115) de la place pour pouvoir y arrêter un véhicule automobile (105) qui est stationné dans la deuxième zone (120) et, pour ce faire, commander le transfert de stationnement (220) du véhicule automobile (105) de la deuxième zone (120) dans la première zone (115),
**caractérisé en ce que**
une autorisation d'utilisation pour une deuxième zone (120) est demandée (320) ou retournée (325) prévisionnellement et un besoin prévisionnel pour la taille de la deuxième zone (120) étant prédit (310) sur la base de données historiques et un agrandissement de la deuxième zone (120) étant demandé (320) en fonction du besoin prévisionnel.

8. Système (100) selon la revendication précédente, comprenant en outre un système de contrôle de trafic (160) pour véhicules automobiles (105) sur l'aire de stationnement (110), le dispositif de commande (125) étant conçu pour guider un véhicule automobile (105) conduit manuellement le long d'un chemin sur l'aire de stationnement (110) qui se rapproche successivement de la première zone (115).
